## Europäisches Patentamt

## European Patent Office

## Office européen des brevets

(11) Numéro de publication: **0 191 257**
**B1**

## FASCICULE DE BREVET EUROPÉEN

(45) Date de publication du fascicule du brevet:
10.05.89

(21) Numéro de dépôt: 85402562.4

(22) Date de dépôt: 19.12.85

(51) Int. Cl.⁴: **G 01 N 21/07, B 04 B 5/04**

(54) Rotor à pipetage dynamique pour dispositif d'analyse à centrifugation.

(30) Priorité: 21.12.84 FR 8419617

(43) Date de publication de la demande:
20.08.86 Bulletin 86/34

(45) Mention de la délivrance du brevet:
10.05.89 Bulletin 89/19

(84) Etats contractants désignés:
AT BE CH DE FR GB IT LI LU NL SE

(56) Documents cité:
EP-A-0 039 825
EP-A-0 062 907
EP-A-0 073 512
DE-A-2 529 245

(73) Titulaire: INOVELF, Société anonyme dite:, Tour
ELF 2 Place de la Coupole La Défense 6, F-92400
Courbevoie (FR)

(72) Inventeur: Cornut, Bruno, 16, rue du Relais. F-64000
Pau (FR)

(74) Mandataire: Boillot, Marc, SOCIETE NATIONALE
ELF AQUITAINE Division Propriété Industrielle
Tour Elf, F-92078 Paris la Défense Cédex 45 (FR)

LIBER, STOCKHOLM 1989

EP 0 191 257 B1

## Description

L'invention concerne un rotor pour dispositif d'analyse à centrifugation comportant, du centre vers la périphérie,

1°) des réceptacles centraux de liquides à diluer avant analyse,

2°) des cuves de calibrage et des cuves de trop plein,

3°) une cuve de mélange et, 4°) des cellules de mesure.

De tels rotors sont connus dans l'état de la technique, notamment par la demande de brevet Européen N° 0 062 907. Ce dispositif permet bien de calibrer un échantillon de liquide mais la disposition de la cuve de calibrage et l'orientation de son orifice de trop plein imposent au liquide sortant de cette cuve une direction d'écoulement qui n'est pas favorable à la précision de la mesure et oblige en outre à l'arrêt du rotor et à sa mise en rotation en sens inverse lorsque l'on veut faire passer le liquide à analyser des cuves de calibrage aux cellules de mesure.

La présente invention procure un rotor qui permet de remédier à ces inconvénients tout en offrant des possibilités d'analyses supplémentaires.

A cet effet, l'invention concerne un rotor pour dispositif d'analyse à centrifugation comportant, du centre vers la périphérie,

1°) des réceptacles centraux de liquides à diluer avant analyse,

2°) des cuves de calibrage et des cuves de trop plein,

3°) une cuve de mélange et,

4°) des cellules de mesure,

caractérisé en ce que les cuves de calibrage sont disposées de façon sensiblement parallèles aux cuves de trop plein et comportent, en plus de leur orifice d'alimentation et de leur orifice de trop plein un orifice pratiqué dans la paroi de la cuve de calibrage opposée à l'orifice d'alimentation, cet orifice étant ouvert en permanence et ayant une section beaucoup plus petite que celle des orifices d'alimentation et de trop plein. Cette disposition permet un remplissage rapide de la cuve de calibrage et une évacuation immédiate de son trop plein. Du liquide commence à s'échapper de la chambre de calibrage dès le début de son remplissage. Ceci laisse à la mesure toute sa précision car le rapport du temps de remplissage au temps d'écoulement par l'orifice de sortie peut être aussi petit que l'on veut, puisqu'il est fonction du rapport des sections des orifices. On remarque en outre que le passage du liquide de la cuve de calibrage à la cuve de mélange se fait en continu et en totalité sans que l'on ait à inverser le sens de rotation du rotor.

Selon une caractéristique de l'invention, l'orifice de sortie des cuves de calibrage est un capillaire orienté tangentiellement à la paroi des cuves de calibrage opposée à l'orifice d'entrée. Ceci permet d'augmenter l'effet de freinage dû à la faible section de l'orifice de sortie.

Il est encore avantageux que la cuve de mélange soit subdivisée en plusieurs secteurs associés chacun à deux ou plus de deux cuves de calibrage et que les orifices de sortie de deux cuves de calibrage soient voisins ou même débouchent par un capillaire commun dans la cuve de mélange. Chaque secteur peut alors servir à une analyse différente, l'une des cuves de calibrage recevant par exemple du liquide à analyser et la ou les autres cuves de calibrage recevant un réactif et/ou un liquide de dilution.

Selon une autre caractéristique de l'invention, l'orifice de sortie d'une cuve de calibrage débouche sur un siphon dont le coude se trouve sensiblement à la même distance du centre du rotor que l'orifice de trop plein de la cuve de calibrage. Grâce à cette disposition, il suffit d'arrêter le rotor à la fin du remplissage de la cuve de calibrage et de laisser jouer les forces capillaires dans le siphon pour qu'il s'amorce automatiquement sans que l'on ait à exercer de pression supplémentaire sur le liquide. On constate que la petite masse de liquide qui est entrainée par ces forces capillaires et déborde légèrement le coude du siphon suffit, lors de la remise en route du rotor, à parfaire l'amorçage du siphon et à attirer tout le liquide se trouvant dans la cuve de calibrage jusqu'à sa vidange complète.

Selon une autre caractéristique de l'invention, l'orifice de sortie d'une cuve de calibrage débouche sur un siphon dont le coude se trouve à une distance du centre du rotor supérieure de quelques millimètres à la distance du centre du rotor à l'orifice de trop plein. A la différence de la disposition précédente, celle-ci permet l'amorçage du siphon dès que le niveau du coude est légèrement dépassé et sans que l'on ait à interrompre la rotation du rotor.

Il est à noter que la présence d'un siphon augmente la précision du calibrage puisqu'elle supprime totalement ou diminue notablement la nécessité de tenir compte d'un débit de fuite par l'orifice de sortie.

Selon encore une autre caractéristique de l'invention, la cuve de calibrage comporte, au-delà de son orifice de sortie, un volume supplémentaire permettant de recueillir un précipité centrifugé. Avec cette disposition, la cuve de calibrage ne se vide donc que jusqu'au "niveau" de l'orifice de sortie et le précipité, constitué par exemple des globules rouges extraits d'un sang complet, reste définitivement retenu dans un volume supplémentaire.

Les caractéristiques et avantages de l'invention ressortiront mieux de la description suivante donnée uniquement à titre d'exemple en référence aux dessins schématiques annexés dans lesquels:

-       la figure 1 est une vue partielle de dessus d'un rotor selon l'invention comportant deux cuves de calibrage et une seule cuve de mélange,

-       la figure 2 est une vue partielle d'un rotor comportant plusieurs secteurs,
- la figure 3 est une vue partielle d'un rotor dont une cuve de calibrage est pourvue d'un siphon, et,
- la figure 4 est une vue partielle d'un rotor dont une cuve de calibrage comporte un volume supplémentaire de décantation.

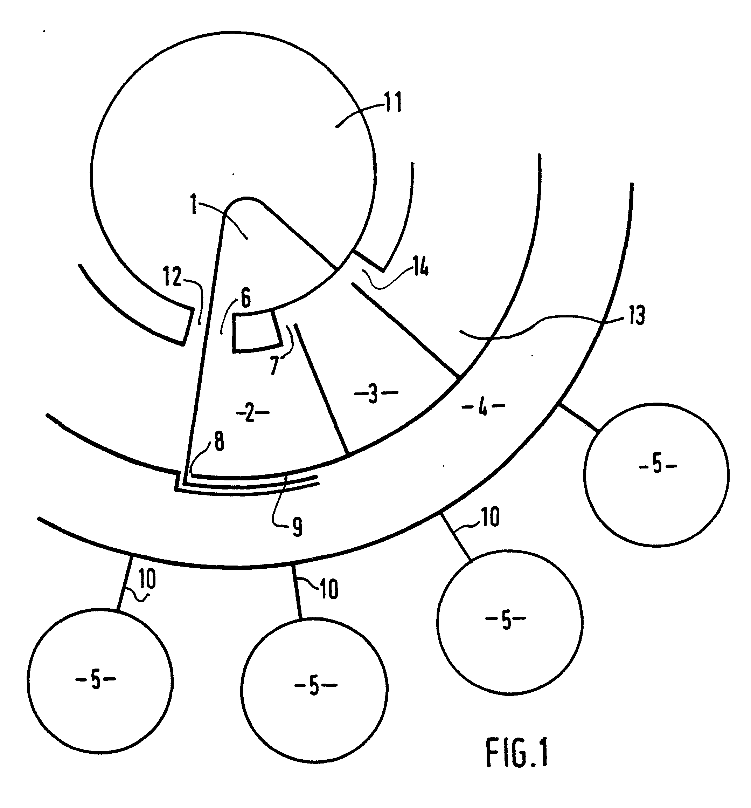

Sur la figure 1, le rotor comporte un réceptacle central 1 relié par un orifice 6 à une cuve de calibrage 2. La cuve 2 est elle-même reliée par un orifice 7 à la cuve de trop plein 3. La cuve de calibrage 2 débouche par un orifice 8 dans la cuve de mélange 4, soit directement, soit par l'intermédiaire d'un capillaire 9. La chambre de mélange 4 est elle-même reliée aux différentes cellules de mesure 5 par des conduits 10. Pour recevoir un liquide de dilution, le rotor comporte encore un réceptacle central 11 relié par un orifice 12 à une deuxième cuve de calibrage 13, cette dernière étant reliée par un orifice 14 à la cuve de trop plein 3 ou à une autre cuve analogue non représentée.

Bien entendu, les dimensions respectives des réceptacles centraux, des cuves et des cellules peuvent être très diverses et on les détermine en fonction des nécessités de l'analyse.

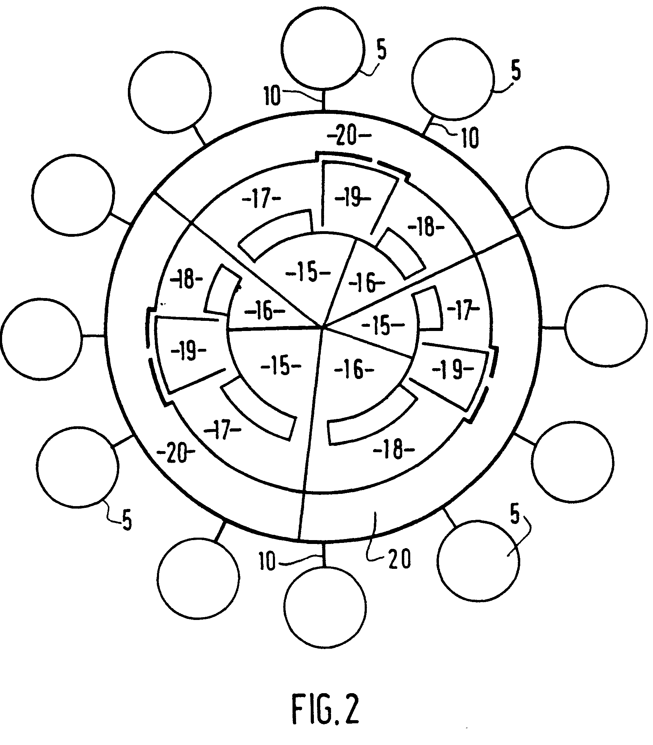

Sur la figure 2, le rotor est subdivisé en trois secteurs comportant chacun au moins deux réceptacles centraux 15, 16, deux cuves de calibrage 17, 18, une cuve de trop plein 19 et une cuve de mélange 20.

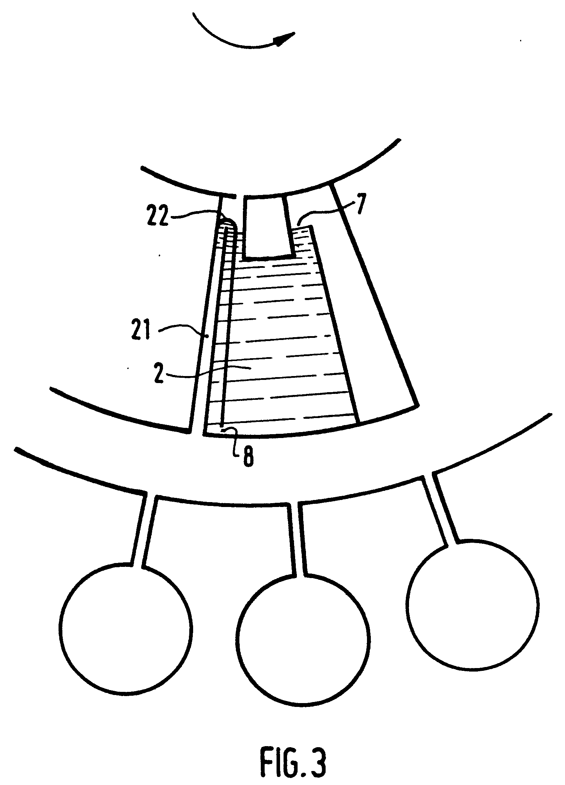

Sur la figure 3, l'orifice 8 de la cuve 2 se prolonge par un siphon 21 dont le coude 22 se situe légèrement au-dessus du niveau de l'orifice de trop plein 7. Pendant la rotation du rotor, les forces capillaires sont négligeables par rapport à la force centrifuge et les interfaces liquide-air épousent la forme d'un cylindre de révolution dont l'axe est commun à celui du rotor et la longueur du rayon est égale à la distance du centre du rotor à l'orifice 7. A l'arrêt du rotor, les forces capillaires reprennent leur importance relative et une petite masse de liquide s'engage dans le tube du siphon, suffisante pour attirer le reste du liquide lors de la remise en route ultérieure du rotor.

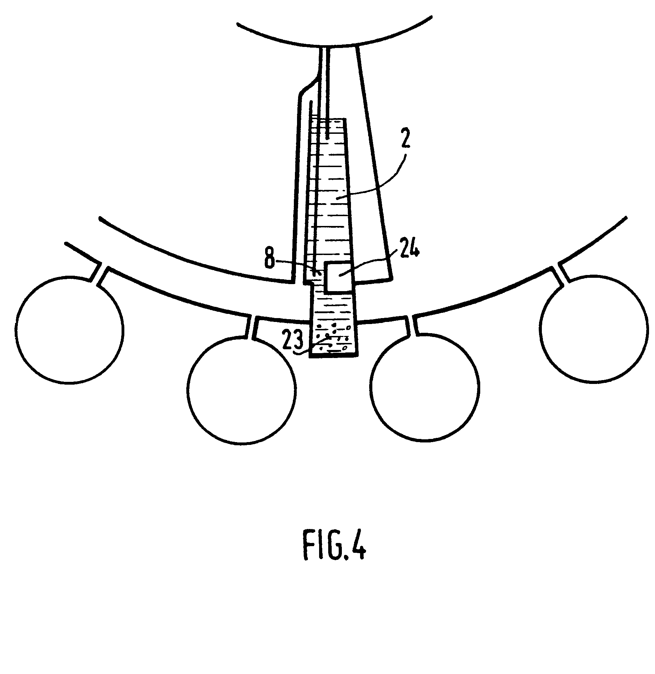

Sur la figure 4, la cuve de calibrage 2 est prolongée par un volume supplémentaire 23 dans lequel on peut recueillir un précipité séparé par la centrifugation. On peut, si l'on souhaite augmenter la précision du calibrage, disposer en face de l'orifice de sortie 8 un bloc 24 qui réduit la section d'écoulement de la cellule 2 vers vers le volume 23.

Bien entendu, les dimensions respectives des réceptacles centraux, des cuves et des cellules peuvent être très diverses et on les détermine en fonction des nécessités de l'analyse.

**Revendications**

1. Rotor pour dispositif d'analyse à centrifugation comportant, du centre vers la périphérie, des réceptacles centraux (1) de liquide à diluer avant analyse, des cuves de calibrage (2) et des cuves de trop plein (3) chaque cuve de calibrage (2) présentant un orifice d'alimentation (6) et un orifice de trop plein (7) par lesquels la cuve de calibrage considérée communique respectivement avec un réceptacle central (1) et avec une cuve de trop plein (3) une cuve de mélange (4) communiquant avec les cuves de calibrage (2) et des cellules de mesures (5) reliées à la cuve de mélange (4), caractérisé en ce que les cuves de calibrage (2) sont disposées de façon sensiblement parallèle aux cuves de trop plein (3) autour des réceptacles centraux (1), en ce que chaque cuve de calibrage (2), outre son orifice d'alimentation (6) et son orifice de trop plein (7), comporte un orifice (8) de sortie mettant en communication la cellule de calibrage avec la cuve de mélange (4) et pratiqué dans une zone de la paroi de la cuve de calibrage qui consiste en la paroi opposée à l'orifice (6) de la cuve ou qui est voisine de ladite paroi opposée à l'orifice (6), ledit orifice de sortie (8) étant ouvert en permanence et ayant une section beaucoup plus petite que celle des orifices d'alimentation (6) et de trop plein (7) et en ce que l'orifice de trop plein (7), par lequel une cuve de calibrage (2) communique avec une cuve de trop plein (3), est situé à une distance du centre du rotor qui est intermédiaire entre les distances du centre du rotor respectivement à l'orifice d'alimentation (6) et, à l'orifice de sortie (8) de la cuve de calibrage (2).

2. Rotor selon la revendication 1, caractérisé en ce que l'orifice (8) de sortie des cuves de calibrage (2) communique avec la cuve de mélange (4) par l'intermédiaire d'un capillaire (9), ledit capillaire étant orienté tangentiellement à la paroi des cuves de calibrage opposée à l'orifice d'alimentation (6).

3. Rotor selon la revendication 1 ou 2, caractérisé en ce que les orifices de sortie de deux cuves de calibrage adjacentes (17, 18) sont voisins et débouchent par un capillaire commun dans la cuve de mélange (4).

4. Rotor selon la revendication 1, caractérisé en ce que l'orifice de sortie (8) d'une cuve de calibrage (2) est pratiqué dans une zone de la paroi de ladite cuve de calibrage qui est voisine de la paroi opposée à l'orifice d'alimentation (6) de cette cuve (2) et en ce que ledit orifice (8) de sortie débouche sur un siphon, qui communique avec la chambre de mélange (4) et dont le coude se trouve sensiblement à la même distance du centre du rotor que l'orifice de trop plein (7) de la cuve de calibrage.

5. Rotor selon la revendication 1, caractérisé en ce que l'orifice de sortie (8) d'une cuve de calibrage (2) est pratiqué dans une zone de la paroi de ladite cuve de calibrage qui est voisine de la paroi opposée à l'orifice d'alimentation (6) de cette cuve et en ce que ledit orifice (8) de sortie débouche sur un siphon, qui communique avec la chambre de mélange (4) et dont le coude se trouve à une distance du centre du rotor supérieure de quelques millimètres à la distance du centre du rotor à l'orifice de trop plein (7).

6. Rotor selon l'une des revendications 1 à 5, caractérisé en ce que la cuve de mélange (4) est subdivisée en plusieurs secteurs (20) associés chacun à deux (17, 18) ou plus de deux cuves de calibrage.

7. Rotor selon l'une des revendications 1 à 6, caractérisé en ce que la cuve de calibrage (2) comporte, au-delà de son orifice de sortie (8), un volume supplémentaire (23) permettant de recueillir un précipité centrifugé.


**Patentansprüche**

1. Rotor für eine Zentrifugieranalyse-Vorrichtung mit, von der Mitte aus gesehen zum Umfang hin, zentralen Behältern (1) für eine vor der Analyse zu verdünnende Flüssigkeit, mit Meßbehältern (2) und Überlaufbehältern (3) wobei jeder Meßbehälter (2) eine Zuführöffnung (6) und eine Überlauföffnung (7) aufweist, durch die der betrachtete Meßbehälter jeweils mit einem zentralen Behälter (1) und mit einem Überlaufbehälter (3) in Verbindung steht, mit einem Mischbehälter (4) der mit den Meßbehältern (2) in Verbindung steht, und mit Dosierzellen (5) die mit dem Mischbehälter (4) verbunden sind, dadurch gekennzeichnet daß die Meßbehälter (2) im wesentlichen parallel zu den Oberlaufbehältern (3) um die zentralen Behälter (1) angeordnet sind, daß jeder Meßbehälter (2) außer seiner Zuführöffnung (6) und seiner Oberlauföffnung (7) eine Auslaßöffnung (8) aufweist, die die Meßzelle mit dem Mischbehälter (4) in Verbindung setzt und in einer Zone der Wand des Meßbehälters vorgesehen ist, die aus der der Öffnung (6) des Behälters gegenüberliegenden Wand besteht oder die zu der der Öffnung (6) gegenüberliegenden Wand benachbart ist, wobei die Auslaßöffnung (8) ständig offen ist und einen Querschnitt aufweist, der viel kleiner als der der Zuführöffnung (6) und der Überlauföffnung (7) ist, und daß die Überlauföffnung (7) 1 durch die ein Meßbehälter (2) mit einem Überlaufbehälter (3) in Verbindung steht, in einem Abstand zur Rotormitte angeordnet ist, der zwischen den Abständen der Rotormitte zur Zuführöffnung (6) bzw. zur Auslaßöffnung (8) des Meßbehälters (2) liegt.

2. Rotor nach Anspruch 1, dadurch gekennzeichnet daß die Auslaßöffnung (8) der Meßbehälter (2) mittels einer Kapillare (9) mit dem Mischbehälter (4) in Verbindung steht, wobei die Kapillare tangential zu der der Zuführöffnung (6) gegenüberliegenden Wand der Meßbehälter ausgerichtet ist.

3. Rotor nach Anspruch 1 oder 2, dadurch gekennzeichnet daß die Auslaßöffnungen zweier aneinander angrenzender Meßbehälter (17, 18) benachbart sind und durch eine gemeinsame Kapillare in den Mischbehälter (4) münden.

4. Rotor nach Anspruch 1, dadurch gekennzeichnet daß die Auslaßöffnung (8) eines Meßbehälters (2) in einer Wandzone des Meßbehälters vorgesehen ist, die an die der Zuführöffnung (6) dieses Behälters (2) gegenüberliegende Wand angrenzt, und dadurch, daß die Auslaßöffnung (8) in einen Siphon mündet, der mit der Mischkammer (4) in Verbindung steht und dessen Krümmer sich im wesentlichen im selben Abstand zur Rotormitte befindet wie die Überlauföffnung (7) des Meßbehälters.

5. Rotor nach Anspruch 1, dadurch gekennzeichnet daß die Auslaßöffnung (8) eines Meßbehälters (2) in einer Wandzone des Meßbehälters vorgesehen ist, die an die der Zuführöffnung (6) dieses Behälters gegenüberliegende Wand angrenzt, und dadurch, daß die Auslaßöffnung (8) in einen Siphon mündet, der mit der Mischkammer (4) in Verbindung steht und dessen Krümmer sich in einem Abstand zur Rotormitte befindet, der um einige Millimeter größer ist, als der Abstand der Rotormitte von der Überlauföffnung (7)

6. Rotor nach einem der Ansprüche 1 bis 5, dadurch gekennzeichnet daß der Mischbehälter (4) in mehrere Abschnitte (20) unterteilt ist, von denen jeder zwei (17, 18) oder mehr Meßbehältern zugeordnet ist.

7. Rotor, nach einem der Ansprüche 1 bis 6, dadurch gekennzeichnet daß der Meßbehälter (2) jenseits seiner Auslaßöffnung (8) einen zusätzlichen Raum (23) aufweist, der es erlaubt, eine zentrifugierte Abscheidung aufzufangen.


**Claims**

1. Rotor for centrifugal analysis apparatus comprising, from the centre towards the periphery, central receptacles (1) for liquid to be diluted prior to analysis, calibrating tanks (2) and overflow tanks (3), each calibrating tank (2) having a supply aperture (6) and an overflow orifice (7) via which the calibrating tank in question communicates respectively with a central receptacle (1) and with an overflow tank (3), a mixing tank (4) communicating with the calibrating tanks (2) and measuring cells (5) connected to the mixing tank (4), characterised in that the calibrating tanks (2) are disposed substantially parallel with the overflow tanks (3) around central receptacles (1) and in that each calibrating tank (2) in addition to its supply aperture (6) and its overflow orifice (7), comprises an outlet orifice (8) providing communication between the calibrating cell and the mixing tank (4) and provided in an ares of the calibrating tank wall which consists of the wall opposite the orifice (6) of the tank or wich is adjacent to the said wall opposite the orifice (6), the said outlet orifice (8) being permanently open and having a far smaller cross-section than that of the supply aperture (6) and overflow orifice (7) and in that the overflow orifice (7) through which a calibrating tank (2) communicates with an owerflow tank (3) is situated at a distance from the centre of the rotor which is mid-way between the distances from the centre of the rotor respectively to the aperture (6) and the outlet orifice (8) of the calibrating tank (2).

2. Rotor according to Claim 1, characterised in that the outlet orifice (8) from the calibrating tanks (2) communicates with the mixing tank (4) through a capillary (9), the said capillary being orientated tangentially in respect of the wall of the calibrating tanks wich is opposite the supply aperture (6).

3. Rotor according to Claim 1 or 2, characterised in that the outlet orifices from two adjacent calibrating tanks (17, 18) are adjacent and discharge into the mixing tank (4) via a common capillary.

4. Rotor according to Claim 1, characterised in that the outlet orifice (8) from a calibrating tank (2) is made in an area of the wall of the said calibrating tank which is adjacent to the wall opposite the supply aperture (6) of this tank (2) and in that the said outlet orifice (8) discharges into a syphon which communicates with the mixing chamber (4), the bend in which is substantially at the same distance fram the centre of the rotor as the overflow orifice (7) of the calibrating tank.

5. Rotor according to Claim 1, characterised i that the outlet orifice (8) of a calibrating tank (2) is provided in an area of the wall of the said calibrating tank which is adjacent to the wall opposite the supply aperture (6) of this tank and in that the said outlet orifice (8) discharges into a syphon which communicates with the mixing chamber (4) and of which the bend is at a distance from the centre of the rotor which is greater by a few millimeters than the distance from the centre of the rotor to the overflow orifice (7).

6. Rotor according to one of Claims 1 to 5, characterised in that the mixing tank (4) is subdivided into a plurality of segments (20), each of which is associated with two (17, 18) or more than two calibrating tanks.

7. Rotor according to one of Claims 1 to 6, characterised in that the calibrating tank (2) comprises in addition to its outlet orifice (8) an additional space (23) which makes it possible to collect a centrifuged precipitate.

FIG.1

FIG. 2

FIG.3

FIG.4